# EUROPÄISCHE PATENTSCHRIFT

(11) **EP 0 683 334 B1**
(45) Veröffentlichungstag und Bekanntmachung des Hinweises auf die Patenterteilung: **29.12.1997**
(21) Anmeldenummer: 95106683.6
(22) Anmeldetag: 04.05.1995
(51) Int. Cl.: F16H 61/00

(54) **Verfahren zur Einstellung der Vorspannkraft für das Transmissionselement eines stufenlosen Getriebes**
Method for adjusting the pre-stressing force of the transmission element of a continuously variable transmission
Procédé pour l'ajustage de la force de précharge de l'élément de transmission d'une transmission à variation continue

(30) Priorität: 18.05.1994 DE 4417346
(43) Veröffentlichungstag der Anmeldung: 22.11.1995
(73) Patentinhaber: TEMIC TELEFUNKEN microelectronic GmbH, 74072 Heilbronn (DE)
(72) Erfinder: Genzel, Michael, D-90574 Rosstal (DE); Hettich, Gerhard, Dr., D-90599 Dietenhofen (DE); Ramm, Norbert, D-38106 Braunschweig (DE)
(74) Vertreter: Maute, Hans-Jürgen, Dipl.-Ing.

(56) Entgegenhaltungen:
- EP-A- 0 228 199
- EP-A- 0 634 590
- US-A- 4 619 629
- US-A- 4 631 043

## Beschreibung

Die Erfindung betrifft ein Umschlingungsgetriebe mit zwei Kegelscheibenpaaren, die jeweils aus einer axial feststehenden Scheibenpaarhälfte und einer axial verschieblichen Scheibenpaarhälfte bestehen, wobei die axial verschiebliche Scheibenpaarhälfte von einem hydraulischen Druck, der in einem jeweiligen Axialstellraum der Scheibenpaarhälfte herrscht, axial betätigt wird, wie es aus der US-A-4,619,629 bekannt ist.

Für viele Anwendungsfälle ist es wichtig, das Zusammenspiel eines Motors und des dazugehörigen Getriebes zu optimieren - beispielsweise muß zur Senkung des Kraftstoffverbrauchs von Kraftfahrzeugen neben einer verbesserten Ansteuerung des Motors auch die Getriebeübersetzung angepaßt werden. Hierfür bieten sich Automatikgetriebe an, wobei in zunehmendem Maße, insbesondere stufenlose Umschlingungsgetriebe (CVT "Continuous Variable Transmission"), eingesetzt werden, bei denen durch ein zwischen den Scheiben zweier Kegelscheibenpaare angeordnetes Transmissionselement (Kette, Band, Riemen etc.) das Übersetzungsverhältnis kontinuierlich verändert werden kann. Durch Anlegen des gleichen Werts der Anpreßkraft auf die beiden Kegelscheibenpaare - dies entspricht der sog. Vorspannkraft - wird das Kraftniveau für das Transmissionselement eingestellt. Durch Vorgabe unterschiedlicher Werte der Anpreßkraft auf die beiden Kegelscheibenpaare wird eine zusätzliche Kraftkomponente zum Transport des Transmissionselements erzeugt; durch Variation der Anpreßkraft und damit der Transportkraft kann das Übersetzungsverhältnis in beliebigen Schritten stufenlos variiert werden.

Bei der eingangs genannten gattungsbildenden Schrift US-A-4,619,629 erfolgt die Regelung der Anpreßkraft, mit der die Kegelscheibenpaare das Transmissionselement halten oder auf einen anderen Radius verdrängen, durch ein Regelverfahren, bei dem die momentane Übertragungseffizienz des Umschlingungsgetriebes mit einer berechneten übertragungseffizienz ermittelt wird. Die Übertragungseffizienz wird dabei aus dem Produkt der Umdrehungszahlen und des Drehmomentes des getriebenen Scheibenpaares, dividiert durch das Produkt der Umdrehungszahlen und des Drehmomentes des treibenden Scheibenpaares, ermittelt. Für dieses Verfahren sind Sensoren zur Bestimmung der Drehzahl und des Drehmomentes der zwei Kegelscheibenpaare notwendig. Die Erkennung, ob das Transmissionselement rutscht, ist dementsprechend langsam und träge.

Problematisch ist bei einem Umschlingungsgetriebe, daß beim Rutschen des Transmissionselements (d. h. beim Auftreten von Schlupf) die Kegelscheibenpaare und das Transmissionselement beschädigt werden können. Um ein Rutschen des Transmissionselements zu verhindern, wird deshalb eine hohe Vorspannkraft vorgegeben, was jedoch einerseits den Wirkungsgrad des Umschlingungsgetriebes und andererseits dessen Lebensdauer vermindert.

Der Erfindung liegt die Aufgabe zugrunde, ein Verfahren gemäß dem Oberbegriff des Patentanspruchs 1 anzugeben, bei dem das Auftreten von Schlupf zwischen dem Transmissionselement und den Kegelscheibenpaaren vermieden wird, ohne die genannten Bauteile übermäßig zu beanspruchen. Diese Aufgabe wird erfindungsgemäß durch die Merkmale im Kennzeichen des Patentanspruchs 1 gelöst. Vorteilhafte Weiterbildungen des Verfahrens ergeben sich aus den Unteransprüchen.

Bei dem vorgestellten Verfahren erfolgt die Schlupferkennung in der Art, daß ständig die Länge des Transmissionselementes gemessen wird. Dabei wird der Schlupf des Transmissionselementes auf den Kegelscheibenpaaren an einer scheinbaren Zunahme der Länge des Transmissionselementes erkannt.

Jedoch kann die Länge des Transmissionselementes während einer Inbetriebnahme des Umschlingungsgetriebes als konstant angesehen werden.

Beim vorgestellten Verfahren werden - nach der (oder zur) Bestimmung der Startlänge des Transmissionselements - beide Kegelscheibenpaare mit einer Vorspannkraft beaufschlagt, die so gewählt wird, daß bei ihrem Anlegen kein Schlupf auftritt (beispielsweise wird als Vorspannkraft die maximale Anpreßkraft gewählt). Diese Vorspannkraft dient als Startwert für eine Regelung: ausgehend vom Startwert wird die Vorspannkraft variiert und gleichzeitig die virtuelle Länge des Transmissionselements gemessen; bei einer Übereinstimmung der Startlänge und der virtuellen Länge des Transmissionselements wird die Vorspannkraft geringfügig dekrementiert, differieren dagegen die Startlänge und die virtuelle Länge des Transmissionselements voneinander - dies ist ein Anzeichen für das Auftreten von Schlupf - wird die Vorspannkraft auf das Transmissionselement deutlich inkrementiert. Durch kontinuierliche Messung der virtuellen Länge des Transmissionselements wird somit der Schlupfzustand des Systems fortlaufend bestimmt und ausgehend hiervon die Vorspannkraft an die momentanen Erfordernisse angepaßt.

Durch dieses Regelverfahren wird somit die Vorspannkraft unter allen Betriebsbedingungen optimal vorgegeben, und demzufolge das Auftreten von Schlupf über einen längeren Zeitraum durch eine zu geringe Vorspannkraft und die Verminderung der Lebensdauer bzw. des Wirkungsgrads des Umschlingungsgetriebes durch eine zu hohe Vorspannkraft vermieden.

Das vorgestellte Verfahren eignet sich für alle Umschlingungsgetriebe, bei denen die Anpreßkraft und damit die Vorspannkraft auf das Transmissionselement variiert werden kann - beispielsweise bei hydraulischen Umschlingungsgetrieben durch Anlegen von Drücken.

Im folgenden wird das Verfahren anhand eines in der Zeichnung dargestellten Ausführungsbeispiels für ein druckbetriebenes (pneumatisches) umschlingungsgetriebe näher erläutert.

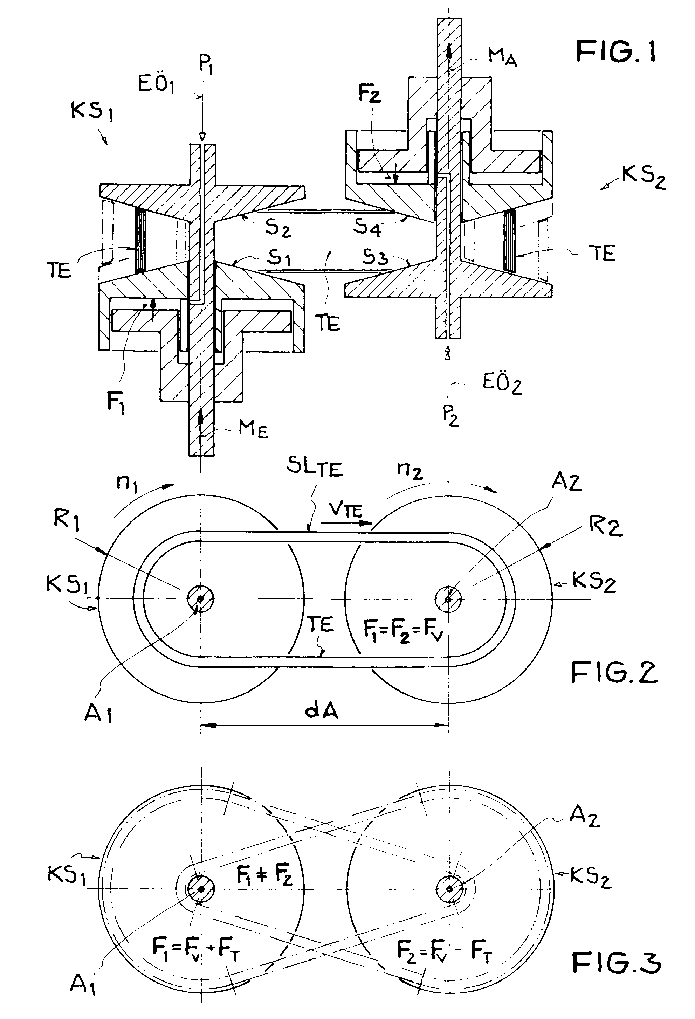

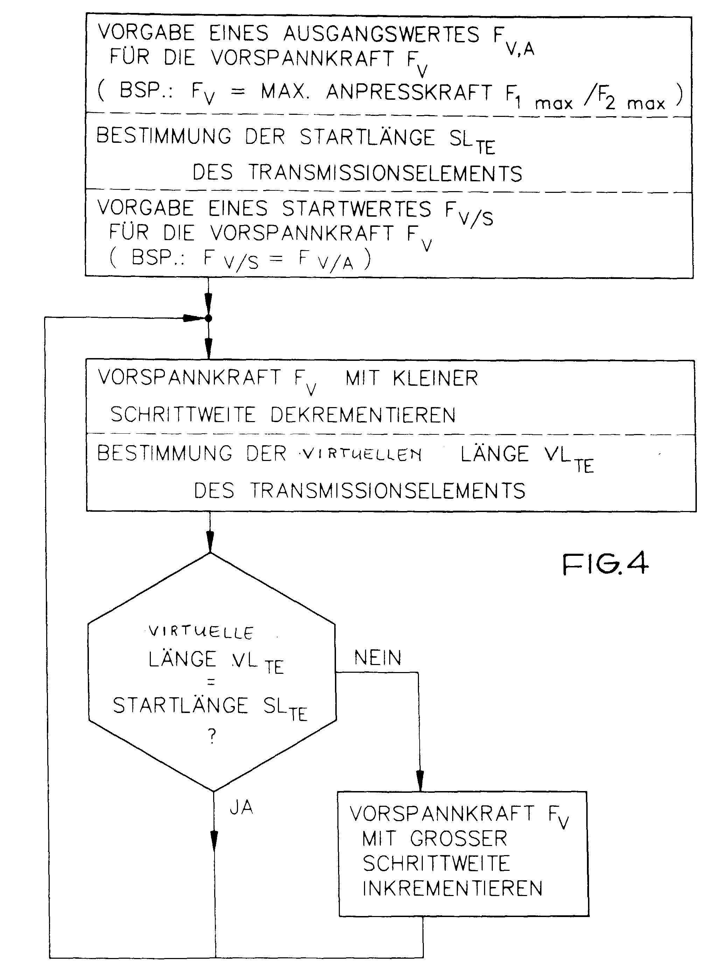

Die Figur 1 zeigt schematisch ein stufenloses pneumatisches Kraftfahrzeug - Umschlingungsgetriebe in Seitenansicht, die Figur 2 und die Figur 3 jeweils eine Schnittzeichnung des Umschlingungsgetriebes und die Figur 4 ein Ablaufdiagramm zur Regelung der Vorspannkraft.

Gemäß der Figur 1 weist das stufenlose Umschlingungsgetriebe als Drehmomentenwandler des Eingangsdrehmoments ME in das Ausgangsdrehmoment MA zwei Kegelscheibenpaare KS₁ bzw. KS₂ mit jeweils zwei kegelförmigen Scheiben S₁, S₂ bzw. S₃, S₄ auf. Zwischen den Scheiben S₁, S₂ bzw. S₃, S₄ der beiden Kegelscheibenpaare KS₁ bzw. KS₂ läuft ein als Kette ausgebildetes Transmissionselement TE um. An den beiden Einlaßöffnungen EÖ₁, EÖ₂ kann - beispielsweise durch Einpressen von Öl - der Druck p₁, p₂ auf die beiden Scheiben S₁ bzw. S₄ der beiden Kegelscheibenpaare KS₁ bzw. KS₂ variiert werden. Zur Vorgabe einer bestimmten Vorspannkraft F_{V} werden die beiden Kegelscheibenpaare KS₁ bzw. KS₂ über die beiden Einlaßöffnungen EÖ₁ bzw. EÖ₂ mit dem gleichen Druckwert p₁ = p₂ beaufschlagt, wodurch sich die gleiche Anpreßkraft F₁, F₂ auf die beiden Kegelscheibenpaare KS₁, KS₂ einstellt und damit das Transmissionselement TE gemäß der Figur 2 mit der Vorspannkraft F_{V} = F₁ = F₂ vorgespannt wird. Werden dagegen die beiden Kegelscheibenpaare KS₁ und KS₂ mit unterschiedlichen Anpreßkräften F₁ ≠ F₂ durch Vorgabe unterschiedlicher Druckwerte p₁ ≠ p₂ beaufschlagt (siehe Figur 3), ergibt sich eine Kraftkomponente als Transportkraft FT, die zur Bewegung des Transmissionselements TE führt (es gilt: Anpreßkraft F₁, F₂ = Vorspannkraft F_{V} ± Transportkraft FT). Durch Variation der Anpreßkräfte F₁, F₂ und damit der Transportkraft FT wird die Bewegung des Transmissionselements TE (der Kette) verändert und hierdurch das Übersetzungsverhältnis sowie die Drehmomentenwandlung in stufenlosen Schritten variiert.

Die Startlänge SL_{TE} des Transmissionselements (die Kettenlänge) kann als Funktion der Radien R₁, R₂ der beiden Kegelscheibenpaare KS₁, KS₂ und des (vorgegebenen und bekannten) Abstands dA der Achsenmitten (Achsen A₁, A₂) der beiden Kegelscheibenpaare KS₁, KS₂ dargestellt werden; die Radien R₁, R₂ der Kegelscheibenpaare KS₁, KS₂ hängen wiederum von den Drehzahlen n₁, n₂ der Kegelscheibenpaare KS₁, KS₂ und von der Umlaufgeschwindigkeit V_{TE} des Transmissionselements TE (Kettengeschwindigkeit) ab. Zur Erfassung des Schlupfzustands des Systems über die Bestimmung der im Betrieb entstehenden scheinbaren Länge oder virtuellen Länge VL_{TE} des Transmissionselements TE müssen daher die Drehzahlen n₁, n₂ der beiden Kegelscheibenpaare KS₁, KS₂ und die Umlaufgeschwindigkeit V_{TE} gemessen werden: die Drehzahlen n₁, n₂ werden beispielsweise durch Drehzahlfühler und segmentierte Meßräder bestimmt; zur Bestimmung der Umlaufgeschwindigkeit V_{TE} kann beispielsweise ein an der Mitte zwischen den Achsen A₁, A₂ angebrachter Drehzahlfühler vorgesehen werden, der die infolge der Bewegung des Transmissionselements TE erzeugte Änderung der magnetischen Eigenschaften ermittelt.

Bei einem als Kette ausgebildeten Transmissionselement ist zur optimierten Vorgabe der Vorspannkraft F_{V} auf die beiden Kegelscheibenpaare KS₁ bzw. KS₂ gemäß dem Flußdiagramm der Figur 4 folgendes Regelverfahren vorgesehen:
- als Ausgangswert F_{V,A} für die Vorspannkraft F_{V} wird ein hoher Wert vorgegeben - beispielsweise ist F_{V,A} die maximal mögliche Anpreßkraft F₁ₘₐₓ, F₂ₘₐₓ - und bei dieser Vorspannkraft F_{V,A} die (tatsächliche) Startlänge der Kette SL_{TE} bestimmt; dieser Ausgangswert FV,A für die Vorspannkraft F_{V} wird als Startwert FV,S für die Regelung der Vorspannkraft F_{V} übernommen,
- ausgehend hiervon wird die Vorspannkraft F_{V} mit kleiner Schrittweite dekrementiert und die virtuelle Kettenlänge VL_{TE} über die Messung der Drehzahlen n₁, n₂ der Kegelscheibenpaare KS₁, KS₂ und der Kettengeschwindigkeit V_{TE} kontinuierlich bestimmt,
- die virtuelle Kettenlänge VL_{TE} wird mit der (tatsächlichen) Startlänge der Ketten SL_{TE} verglichen und anhand dieses Vergleichs der Schlupfzustand des Systems bestimmt,
- ist der Schlupfzustand bekannt, wird das Druckniveau und demzufolge auch das Kraftniveau durch entsprechende Änderung der Vorspannkraft variiert: entweder durch Erhöhung (Inkrementieren) der Vorspannkraft F_{V} mit großer Schrittweite (falls Schlupf vorhanden ist, d. h. SL_{TE} ≠ VL_{TE}) oder durch Verminderung (Dekrementieren) der Vorspannkraft F_{V} mit kleiner Schrittweite (falls kein Schlupf vorhanden ist, d. h. SL_{TE} = VL_{TE}).

Unter der Voraussetzung, daß der Schlupf auf beide Kegelscheibenpaare KS₁, KS₂ verteilt ist, kann der Absolutbetrag des Schlupfs durch Berechnung bestimmt werden. Die optimale Vorspannkraft F_{V} auf das Transmissionselement TE wird etwas höher als derjenige Kraftwert gewählt, bei dem erstmalig Schlupf auftritt, d. h. das Transmissionselement (beispielsweise die Kette) leicht zu rutschen beginnt.
Die Vorspannkraft F_{V} und damit auch die Anpreßkräfte F₁, F₂ können somit bei allen äußeren Bedingungen und bei allen Änderungen der äußeren Gegebenheiten - beispielsweise unterschiedlichen Übersetzungen des Umschlingungsgetriebes, unterschiedlicher Fahrbahnbeschaffenheit, unterschiedlichen Fahrbedingungen etc. - optimal vorgegeben werden.

## Patentansprüche

1. Verfahren zur Einstellung der Vorspannkraft (F_{V}) für das Transmissionselement (TE) eines stufenlosen Umschlingungsgetriebes mit zwei Kegelscheibenpaaren (KS₁, KS₂), die jeweils aus einer axial feststehenden Kegelscheibenpaarhälfte und einer axial verschieblichen Kegelscheibenpaarhälfte bestehen, wobei die axial verschiebliche Kegelscheibenpaarhälfte von einem hydraulischem Druck, der in einem jeweiligen Axialstellraum der Kegelscheibenpaarhälfte herrscht, gekennzeichnet durch die Verfahrensschritte:
A) Bei der Inbetriebnahme des Umschlingungsgetriebes:
a) Bestimmung der Startlänge (SL_{TE}) des Transmissionselements (TE),
b) Vorgabe eines hohen Startwerts (F_{V,S}) für die Vorspannkraft (F_{V}),
B) Zyklisch beim Betrieb des Umschlingungsgetriebes:
a) geringfügiges Dekrementieren der Vorspannkraft (F_{V})
b) Bestimmung der virtuellen Länge (VL_{TE}) des Transmissionselements (TE).
c) Bestimmung des Schlupfes des Transmissionselements (TE) auf den Kegelscheibenpaaren (KS₁, KS₂) durch Vergleich von Startlänge (SL_{TE}) und virtueller Länge (VL_{TE}) des Transmissionselements (TE), wobei im Falle einer Abweichung ein starkes Inkrementieren der Vorspannkraft (F_{V}) erfolgt.

2. Verfahren nach Anspruch 1, dadurch gekennzeichnet, daß die Startlänge (SL_{TE}) des Transmissionselementes (TE) beim Anlegen eines Ausgangswerts (F_{V,A}) für die Vorspannkraft (F_{V}) bestimmt wird.

3. Verfahren nach Anspruch 2, dadurch gekennzeichnet, daß als Ausgangswert (F_{V,A}) der Vorspannkraft (F_{V}) die maximale Anpreßkraft (F₁ₘₐₓ, F₂ₘₐₓ) für die beiden Kegelscheibenpaare (KS₁, KS₂) vorgegeben wird.

4. Verfahren nach einem der Ansprüche 1 bis 3, dadurch gekennzeichnet, daß als Startwert (F_{V,S}) für die Vorspannkraft (F_{V}) der Ausgangswert (F_{V,A}) der Vorspannkraft gewählt wird.

5. Verfahren nach einem der Ansprüche 1 bis 4, dadurch gekennzeichnet, daß die Startlänge (SL_{TE}) und die virtuelle Länge (VL_{TE}) des Transmissionselements (TE) über die Messung der Drehzahlen (n₁, n₂) der Kegelscheibenpaare (KS₁, KS₂) und der Umlaufgeschwindigkeit (V_{TE}) des Transmissionselements (TE) bestimmt wird.

6. Verfahren nach Anspruch 5, dadurch gekennzeichnet, daß die Drehzahlen (n₁, n₂) der Kegelscheibenpaare (KS₁, KS₂) und die Umlaufgeschwindigkeit (V_{TE}) des Transmissionselements (TE) über Drehzahlfühler gemessen werden.

7. Verfahren nach einem der Ansprüche 1 bis 6, dadurch gekennzeichnet, daß die Startlänge (SL_{TE}) des Transmissionselements (TE) bei jeder Inbetriebnahme des Umschlingungsgetriebes bestimmt wird und während der Betriebsdauer als konstant angesehen wird.

8. Verfahren nach einem der Ansprüche 1 bis 7 zur Regelung der Vorspannkraft bei einem stufenlosen Umschlingungsgetriebe.

9. Verfahren nach Anspruch 8, dadurch gekennzeichnet, daß die Startlänge (SL_{TE}) des Transmissionselements (TE) nach dem Einschalten des Umschlingungsgetriebe-Steuergeräts des Kraftfahrzeugs bestimmt wird.

## Claims

1. Process for adjusting the pre-stressing force (F_{V}) for the transmission element (TE) of a continuous variable transmission with two bevel disc pairs (KS₁, KS₂), each comprising an axially fixed disc pair half and an axially displaceable disc pair half, whereby the axially displaceable disc pair half is operated axially by a hydraulic pressure prevailing in a respective axial control area of the disc pair half, characterised by the process steps:
A) upon putting the variable transmission into operation:
a) determination of the starting length (SL_{TE}) of the transmission element (TE),
b) presetting of a high starting value (F_{V,S}) for the pre-stressing force (F_{V});
B) cyclically during operation of the variable transmission:
a) slight decrement in the pre-stressing force (F_{V}),
b) determination of the virtual length (VL_{TE}) of the transmission element (TE),
c) determination of the slippage of the transmission element (TE) on the bevel disc pairs (KS₁, KS₂) by comparison of starting length (SL_{TE}) and virtual length (VL_{TE}) of the transmission element (TE), whereby in the case of a deviation a substantial increment in the pre-stressing force (F_{V}) occurs.

2. Process according to Claim 1, characterised in that the starting length (SL_{TE}) of the transmission element (TE) is determined upon application of an initial value (F_{V,A}) for the pre-stressing force (F_{V}).

3. Process according to Claim 2, characterised in that the maximum contact pressure (F₁ₘₐₓ, F₂ₘₐₓ) for both bevel disc pairs is preset as initial value (F_{V,A}) of the pre-stressing force (F_{V}).

4. Process according to one of Claims 1 to 3, characterised in that the initial value (F_{V,A}) of the pre-stressing force is selected as starting value (F_{V,S}) of the pre-stressing force (F_{V}).

5. Process according to one of Claims 1 to 4, characterised in that the starting length (SL_{TE}) and the virtual length (VL_{TE}) of the transmission element (TE) is determined via measurement of the rotational speeds (n₁, n₂) of the bevel disc pairs (KS₁, KS₂) and the rotational speed (V_{TE}) of the transmission element (TE).

6. Process according to Claim 5, characterised in that the rotational speeds (n₁, n₂) of the bevel disc pairs (KS₁, KS₂) and the rotational speed (V_{TE}) of the transmission element (TE) are measured via rotational speed sensors.

7. Process according to one of Claims 1 to 6, characterised in that the starting length (SL_{TE}) of the transmission element (TE) is determined each time the variable transmission is put into operation and is regarded as constant during the period of operation.

8. Process according to one of Claims 1 to 7 for the control of the pre-stressing force in the case of a continuous variable transmission.

9. Process according to Claim 8, characterised in that the starting length (SL_{TE}) of the transmission element (TE) is determined after the variable transmission control device of the motor vehicle has been switched on.

## Revendications

1. Procédé d'ajustage de la force de précharge (F_{V}) pour l'élément de transmission (TE) d'une transmission à élément d'enroulement à variation continue, comportant deux paires de demi-poulies coniques (KS₁, KS₂) qui sont chacune constituées d'une demi-poulie conique fixe dans le sens axial et d'une demi-poulie coulissant dans le sens axial, les demi-poulies coulissant dans la sens axial étant manoeuvrées dans le sens axial par une pression hydraulique qui règne dans un espace axial réglant respectif des demi-poulies, caractérisé par les pas de procédé
A) Lors de la mise en service de la transmission à élément d'enroulement:
a) détermination de la longueur initiale (SL_{TE}) de l'élément de transmission (TE),
b) prescription d'une valeur de départ élevée (F_{V,S}) pour la force de précharge (F_{V}),
B) cycliquement, en cours de service de la transmission à élément d'enroulement:
a) légère décrémentation de la force de précharge (F_{V})
b) détermination de la longueur virtuelle (VL_{TE}) de l'élément de transmission (TE).
c) Détermination du glissement de l'élément de transmission (Te) sur les paires de demi-poulies (KS₁, KS₂) par comparaison de la longueur initiale (SL_{TE}) et de la longueur virtuelle (VL_{TE}) de l'élément de transmission (TE), une forte incrémentation de la force de précharge (F_{V}) se faisant en cas d'écart.

2. Procédé selon la revendication 1, caractérisé par le fait que l'on détermine la longueur initiale ((SL_{TE}) de l'élément de transmission (TE) lors de l'application d'une valeur initiale (F_{V,A}) pour la force de précharge (FV).

3. Procédé selon la revendication 2, caractérisé par le fait que comme valeur initiale ((F_{V,A}) de la force de précharge ((F_{V}), on prescrit la force de serrage maximale (F₁ₘₐₓ, F₂ₘₐₓ) pour les deux paires de demi-poulies (K_{S1}, K_{S2}).

4. Procédé selon l'une des revendications 1 à 3, caractérisé par le fait que comme valeur de départ pour la force de précharge (F_{V}) on choisit la valeur initiale (F_{V,A}) de la force de précharge.

5. Procédé selon l'une des revendications 1 à 4, caractérisé par le fait que l'on détermine la longueur initiale ((SL_{TE}) et la longueur virtuelle ((VL_{TE}) de l'élément de transmission (TE) par la mesure des vitesses de rotation (n1, n2) des paires de demi-poulies (KS₁, KS₂) et de la vitesse périphérique (V_{TE}) de l'élément de transmission (TE).

6. Procédé selon la revendication 5, caractérisé par le fait que l'on mesure les vitesses de rotation (n1, n2) des paires de demi-poulies (KS₁, KS₂) et la vitesse périphérique ((V_{TE}) de l'élément de transmission (TE) au moyen de détecteurs de vitesse de rotation.

7. Procédé selon l'une des revendications 1 à 6, caractérisé par le fait que l'on détermine la longueur initiale (SL_{TE}) de l'élément de transmission (TE) à chaque mise en service de la transmission à élément d'enroulement et qu'on la considère comme constante pendant la durée du service.

8. Procédé selon l'une des revendications 1 à 7, caractérisé pour la régulation de la force de précharge pour une transmission à élément d'enroulement à variation continue.

9. Procédé selon la revendications 8, caractérisé par le fait que l'on détermine la longueur initiale ((SL_{TE}) de l'élément de transmission (TE) après mise en circuit de l'appareil de commande de la transmission à élément d'enroulement du véhicule à moteur.
